# EUROPÄISCHE PATENTANMELDUNG

(11) **EP 3 636 488 A1**
(43) Veröffentlichungstag der Anmeldung: **15.04.2020**
(21) Anmeldenummer: 19201969.3
(22) Anmeldetag: 08.10.2019
(51) Int. Cl.: B60N 3/04

(54) **FUSSMATTENBEFESTIGUNG**

(30) Priorität: 08.10.2018 DE 102018124766
(71) Anmelder: Mayer GmbH Kunststoff- und Lackiertechnik, 89150 Laichingen (DE)
(72) Erfinder: Mayer, Vladimir, 89150 Laichingen (DE)
(74) Vertreter: Witte, Weller & Partner Patentanwälte mbB

(57) **Zusammenfassung**

Fußmatte (10), die aufweist: eine Ober- und eine Unterseite (20,22) sowie eine in der Unterseite (20) integrierte Aufnahme (16) zur Befestigung der Fußmatte (10) an einem Halterungselement (18), wobei die Aufnahme (16) einen Materialausschnitt (28) aufweist, der sich in einen ersten und einen zweiten Bereich (24, 26) unterteilt, wobei der erste Bereich (24) und der zweite Bereich (26) des Materialausschnitts (28) auf der Unterseite (20) nebeneinanderliegen und ineinander übergehen, und wobei der zweite Bereich (26) eine den zweiten Bereich (26) teilweise umschließende Überlappung (34) aufweist, die einen materialverstärkten Hinterschnitt für den zweiten Bereich (26) bildet.

## Beschreibung

Die vorliegende Erfindung betrifft eine Fußmatte, die beispielsweise als ein Bodenbelag in einem Kraftfahrzeug Verwendung findet und dabei auf einem Fahrzeugboden fixierbar ist. Ferner betrifft die vorliegende Erfindung ein Halterungssystem, das eine Fußmatte mit einer Halterung und ein Halterungselement aufweist.

Gattungsgemäße Fußmatten sowie deren Halterungs- bzw. Befestigungselemente und - systeme sind bereits aus der DE 20 2014 101 483 U1, der DE 20 2013 012 222 U1, der DE 10 2016 205 292 A1 sowie der EP 1 251 029 A2 bekannt.

Solche gattungsgemäße Fußmatten bzw. Befestigungssysteme solcher Fußmatten kommen beispielsweise in Kraftfahrzeugen, Lastkraftfahrzeugen oder Geländewagen zum Einsatz, können jedoch auch in nicht-mobilen Bereichen z.B. als Unterlagen an einem Arbeitsplatz Verwendung finden. Für den Einsatz im automobilen Bereich werden Fußmatten zumeist in den Fußräumen der Automobile für die Fahren und/oder Insassen als eine Art Teppich oder Unterlage ausgelegt. Dies dient im Speziellen zum Schutz der Fußräume des Fahrzeuges vor Verschmutzung und/oder Abnutzung, da die Fußräume üblicherweise mit einer Art Stoff ausgekleidet sind.

Es sei darauf hingewiesen, dass hier vorliegend der Begriff "Fußmatte" als Überbegriff für jegliche Art von Unterlage verwendet wird, die auf einer Unterlagefläche z.B. einem Boden auslegbar ist.

Fußmatte können aus Textil hergestellt werden, wobei die sogenannten Textilfußmatten typischerweise aus Polyamid, Polypropylen, Polyesterfasern, Nadelfilz, Vliesstoff oder Tuftvelour sind. Fußmatten aus Gummi werden zumeist aus Styrol-Butadien-Kautschuk, Naturkautschuk, thermoplastischen Elastomeren oder Etylen-Propylen-Dien-Kautschuk oder einem Gemisch dieser Materialien durch Vulkanisation oder thermoplastische Verformung hergestellt.

Eine Möglichkeit der Herstellung von Gummi Fußmatten besteht beispielsweise durch Spritzgießen, wobei ein Rohstoffgemisch in eine Negativform injiziert wird und mit Hilfe der Parameter Temperatur, Druck und Zeit eine Fußmatte in einer vorab definierten Form gepresst wird.

Besonders bei der Benutzung in einem Kraftfahrzeug tritt die allgemein bekannte Problematik auf, dass zum Beispiel durch den Fahrzeugführer oder einen Passagier, die Fußmatte durch eine Hin- und Her-Bewegung der Füße in ihrer Position verändert werden kann. Hierbei kann sich die Fußmatte wellen oder auffalten oder gesamthaft in ihrer Position verschieben. Diese kann vor allem bei Gas-, Brems- oder Kuppelmanövern aber auch bei anderen Steuermanövern dazu führen, dass einzelne oder mehrere Bauteile des Kraftfahrzeugs durch die Verschiebung, Wellung oder Auffaltung der Matte verdeckt werden, wodurch es u. U. zu einer fehlerhaften Bedienung des Fahrzeugs kommen kann. Ein solcher Bedienungsfehler kann zu Unfällen führen. Auch im nicht mobilen Bereich, z.B. bei der Verwendung einer Fußmatte als Arbeitsunterlage, können durch die vorstehend genannte Problematik Unfälle z.B. in Form von Stolpern des Arbeiters verursacht werden.

Um solchen Unfällen vorzubeugen, ist es möglich z.B. im automobilen Bereich die Fußmatte als Halbschale auszugestalten. Eine solche Halbschale schmiegt sich mit ihrer Schalenform der Form der Vertiefung des Fußraums an. Durch den somit entstehenden Formschluss kann zwar ein Verrutschen weitestgehend verhindert werden, jedoch kommt es bei solchen Systemen oftmals zu einer schnellen Abnutzung bzw. einer plastischen Verformung oder einem Abknicken der hochragenden Seitenteile der Halbschalen, wodurch wiederum Störstellen für den Fahrzeuginsassen verursacht werden.

Eine andere Möglichkeit die vorstehend genannten Problematik zumindest teilweise zu lösen, ergibt sich aus dem Stand der Technik durch die Verwendung von Befestigungselementen bzw. Befestigungssystemen, die zum Einsatz kommen um ein Verrutschen bzw. ein sonstiges Verschieben der Fußmatte zu verhindern. Hierbei sind die Fußmatten zumeist als flache Bodenauflage ausgestaltet. Dabei können beispielsweise in Kraftfahrzeugen Stoppersysteme installiert werden, durch die die Fußmatte an zumindest einem im Fahrzeugboden fixierten Bodenelement bzw. Befestigungselement fixiert werden kann. Sind Fahrzeuge nicht seriengemäß mit einem solchen Stopper- bzw. Befestigungssystem ausgerüstet, kann eine Nachrüstung mit einem Nachrüstungsbefestigungssystem erfolgen.

Die aus dem Stand der Technik bekannten Befestigungssysteme bzw. Befestigungselemente für Fußmatten basieren, wie bspw. in der DE 20 2014 101 483 U1 und der DE 20 2014 104 368 U1 gezeigt, auf zumindest einem Halterungselement, das fahrzeugseitig aus dem Fahrzeugboden herausragen und zumindest einem Befestigungselement, das mattenseitig durch eine Ausnehmung in der Fußmatte repräsentiert ist, wobei die Fußmatte durch eine Einstecken der Ausnehmung in das Halterungselement durch das "Druccknopfprinzip" am Fahrzeugboden fixiert werden kann. Hierbei sei erwähnt, dass dieses Fixieren reversibel lösbar ist.

Hierbei wird unter dem "Druckknopfprinzip" die Funktionsweise eines Druckknopfs verstanden, der beispielsweise an einem Kleidungsstück angebracht ist und an diesem als Verschlussmittel dient, wobei der Druckknopf aus zwei Teilen besteht, von denen der eine Teil mit einer Vertiefung, der andere Teil mit einer dazu passenden Aufwölbung versehen ist. Ein korrektes Verschließen ist nur gewährleistet, wenn beide Teile in konzentrischer Positionierung zueinander zusammengedrückt werden.

Bei den bekannten Systemen besteht jedoch allgemein die Problematik, dass bei einem Befestigungsvorgang die Fußmatte die zumindest eine Ausnehmung exakt konzentrisch über der fahrzeugseitig fest fixierten zumindest einen Halterungsvorrichtung zu positionieren ist. Falls es zu einer fehlerhaften Positionierung kommt, kann die Fußmatte nicht fachgemäß fixiert werden, wodurch ein Verrutschen potenziell möglich bleibt.

Somit lösen die aus dem Stand der Technik bekannten Fußmatten bzw. deren Halterungssysteme nicht die Problematik, ein erfolgreiches Fixieren der Fußmatte unabhängiger von der Positionieren der Fußmatte gegenüber dem zumindest einen Befestigungselement zu machen und somit die Anwenderfreundlichkeit bzw. Anwendersicherheit zu erhöhen.

Vor diesem Hintergrund ist es eine Aufgabe der vorliegenden Erfindung, eine Fußmatte bzw. ein Halterungssystem derart weiterzuentwickeln, dass ein erfolgreiches Fixieren der Fußmatte auch bei einer ungenaueren Positionierung der Fußmatte gegenüber einem Befestigungselement erfolgreich durchführbar ist. Dadurch soll insbesondere die Anwendung für den Benutzer vereinfacht werden.

Erfindungsgemäß wird diese Aufgabe ausgehend von der eingangs beschriebenen Fußmatte dadurch gelöst, dass die Fußmatte eine Ober- und eine Unterseite sowie eine in der Unterseite integrierte Aufnahme zur Befestigung der Fußmatte an einem Halterungselement aufweist, wobei die Aufnahme einen Materialausschnitt aufweist, der sich in einen ersten und einen zweiten Bereich unterteilt, wobei der erste Bereich und der zweite Bereich des Materialausschnitts auf der Unterseite nebeneinanderliegen und ineinander übergehen, und wobei der zweite Bereich eine den zweiten Bereich teilweise umschließende Überlappung aufweist, die einen materialverstärkten Hinterschnitt für den zweiten Bereich bildet.

Die erfindungsgemäße Fußmatte hat einen Vorteil, dass durch die Ausgestaltungsform des Materialausschnitts ein Fixieren der Fußmatte an bspw. einem Fahrzeugboden vereinfacht ist, da durch die erfindungsgemäße zumindest teilweise umschließende Überlappung des zweiten Bereiches ein herausrutschen der Fußmatte in eine zu dem Fahrzeugboden orthogonal Richtung verhindert wird. Die Überlappung bildet mit dem materialverstärken Hinterschnitt sozusagen eine "Tasche", in die ein Halterungselement bspw. ein stiftartiges Halterungselement mit einer umlaufenden Wulst, welches an dem Fahrzeugboden befestigt ist, einführbar ist. Der Hinterschnitt bzw. die dadurch entstehende Tasche befindet sich zwischen der Unterseite der Fußmatte und der zumindest teilweise in den zweiten Bereich hineinragenden Überlappung.

Ein weiterer Vorteil der erfindungsgemäßen Ausgestaltung ist, dass der Materialausschnitt lediglich in der Unterseite der Fußmatte vorgesehen ist und nicht bis zur Oberseite der Fußmatte durchragt, was einerseits in ästhetischer Hinsicht vorteilhaft ist und anderseits verhindert, dass an der Stelle der Befestigung der Fußmatte Dreck und insbesondere Flüssigkeit von der Oberseite zur Unterseite gelangt.

Unter dem Begriff "materialverstärkter Hinterschnitt" wird im vorliegenden Fall verstanden, dass der Materialausschnitt eine den zumindest teilweise den zweiten Bereich umgebende Überlappung aufweist, durch welche der zweite Bereich zumindest teilweise überdeckt wird. Somit wird erfindungsgemäß eine Umrandung des zweiten Bereichs nicht nur durch zusätzliches Material dahingehend verstärkt, und somit bei einer Verwendung der Fußmatte im Kraftfahrzeug gegen plastische Verformung geschützt, sondern zudem auch noch zusätzlich durch die erfindungsgemäße Überdeckung gegen ein Herausheben in einer orthogonal zum Fahrzeugboden verlaufenden Richtung fixiert. Durch den Hinterschnitt bzw. durch die Überlappung wird ein herausrutschen also verhindert bzw. blockiert. Zudem wird durch den verstärkten Hinterschnitt die Gesamtsteifigkeit der Fußmatte erhöht.

Ferner betrifft die vorliegende Erfindung eine Halterung, die mit einer Fußmatte, insbesondere mit einer Unterseite einer Fußmatte verbindbar ist, wobei die Halterung einen Materialausschnitt aufweist, der sich in einen ersten und einen zweiten Bereich unterteilt, wobei der erste Bereich und der zweite Bereich des Materialausschnitts nebeneinanderliegen und ineinander übergehen, und wobei der zweite Bereich eine den zweiten Bereich teilweise umschließende Überlappung aufweist, die einen materialverstärkten Hinterschnitt für den zweiten Bereich bildet.

Eine solche erfindungsgemäße Halterung hat den Vorteil, dass grundsätzlich bereits bestehende Fußmatten nachträglich um die erfindungsgemäße Halterung ergänzt werden können und somit ein nachträglicher Retrofit ermöglicht wird. Somit können bspw. bereits gebrauchte Fußmatten weiterhin verwendet werden, wodurch Material und Ressourcen eingespart werden können. Ebenfalls ist eine Anbringung der erfindungsgemäßen Halterung an Fußmatten aus anderen Materialien, insbesondere Fußmatten aus Stoff / Textilien möglich, wodurch die Halterung bei nahezu jeder herkömmlichen, kommerziell verfügbaren Fußmatte installiert und somit verwendet werden kann.

Des Weiteren betrifft die hier vorliegende Erfindung ein Halterungssystem, das ein Halterungselement, das fest mit einer Montagefläche verbindbar ist und in einem verbundenen Zustand zapfenartig aus der Montagefläche hervorragt, und eine Fußmatte mit einer integrierten Aufnahme oder eine Halterung einer Fußmatte aufweist, wobei die Aufnahme der Fußmatte oder die Halterung einer Fußmatte in das Halterungselement einlegbar und über eine parallel zu der Montagefläche verlaufende Zugbewegung entlang einer Vorzugsrichtung mit diesem reversibel lösbar in einer definierten Position verbindbar ist.

Das Halterungselement ist dabei auf der Montagefläche angeordnet und mit dieser fest verbunden. Das Halterungselement kann in die Montagefläche entweder vollintegriert sein oder durch jegliche Art von adhäsiver, formschlüssiger und/oder kraftschlüssiger Verbindung mit diesem verbunden sein.

Unter dem Begriff "Montagefläche" ist hier insbesondere die Auflagefläche einer Fußmatte, bspw. auf einem Fahrzeugboden, zu verstehen. Alternativ kann die Montagefläche auch eine Arbeitsfläche, ein Unterbau, ein Untergrund oder eine (Arbeits-)Plattform sein, die/der bspw. bewegt oder unbewegt ist.

Gemäß einer erfindungsgemäßen Ausgestaltung weist der zweite Bereich einen kreissegmentartigen Querschnitt aufweist. Hierbei wird hier vorliegend unter "kreissegmentartig" verstanden, dass die Form bzw. der Querschnitt des zweiten Bereichs eine Kreisform darstellt, von welcher ein definiertes Kreissegment entfernt wurde. Diese Ausgestaltungsform hat den Vorteil, dass der kreisförmige Querschnitt insbesondere mehr Spiel bei einem Einlegevorgang der Fußmatte bietet. Somit muss die Fußmatte beispielsweise nicht unter einem definierten Winkel in ein Halterungselement eingelegt werden. Der kreisrunde Querschnitt bietet somit eine höhere Flexibilität bei der Befestigung der Fußmatte bspw. an einem Fahrzeugboden und erleichtert somit den Gebrauch für einen Anwender.

In einer weiteren Ausgestaltung sind die Fußmatte und die Aufnahme aus demselben Material gefertigt und insbesondere in einem extrudierenden oder spritzgießenden Prozessschritt gefertigt. Eine solche Herstellung wird z.B. dadurch realisiert, dass die eine Negativform der Fußmatte inklusive der Aufnahme bereitgestellt wird. Dies hat den Vorteil, dass lediglich ein Fertigungsschritt notwendig ist, wodurch Zeit- und Kosten eingespart werden können. Zudem sind bei einer solchen Herstellungsmethode die Aufnahme und die Fußmatte intrinsisch miteinander verbunden. D.h., es gibt keine Grenzschicht (z.B. durch Kleber o. Ä.) zwischen Fußmatte und Aufnahme, die sich gegebenenfalls ablösen könnte.

Gemäß einer weiteren erfindungsgemäßen Ausgestaltung ist die Fußmatte aus Gummi oder einem Elastomer hergestellt. Diese Rohstoffe / Werkstoffe sind aus dem Bereich der Fußmattenherstellung bekannt, wodurch bereits gängige Fertigungsverfahren sowie Fertigungsmaschinen genutzt werden können, wodurch auf zusätzliche Investitionskosten weitgehend verzichtet werden kann. Zudem können Gummi und Elastomere aus Recycling-Granulat hergestellt werden, wodurch auf die extensive Nutzung von Primärrohstoffen verzichtet werden kann. Dies führt neben dem bereits erwähnten Vorteil, zudem zu einem ökologischen Vorteil.

In einer weiteren erfindungsgemäßen Ausgestaltung umfasst der materialverstärkte Hinterschnitt zusätzlich zu der teilweise umschließenden Überlappung des zweiten Bereichs, eine teilweise umschließende Überlappung des ersten Bereichs. Durch diese Ausgestaltungform besteht der Vorteil, dass nicht nur die Gesamtsteifigkeit sowie die Langlebigkeit der Fußmatte erhöht werden, da durch eine zusätzliche Materialverstärkung z.B. ein Ausreisen der Aufnahme bzw. der Halterung z.B. durch eine plastische Deformation des ersten und zweiten Bereichs weitgehend minimiert werden kann. Die Fußmatte wird darüber hinaus durch die erfindungsgemäße Überlappung, welche zumindest teilweise über den zweiten Bereich hervorsteht gegen ein herausrutschen gesichert.

Gemäß einer weiteren Ausgestaltung weist die Aufnahme bzw. die Halterung zusätzlich zu dem materialverstärkten Hinterschnitt Verstärkungsstreben auf, die dazu eingerichtet sind, den Materialausschnitt zu versteifen. Diese Verstärkungsstreben verlaufen vorzugsweise von dem materialverstärken Hinterschnitt ausgehenden sternförmig in die Fußmatte aus, wodurch die Gesamtstabilität der Fußmatte erhöht wird.

Gemäß einer weiteren Ausgestaltung der Aufnahme oder Halterung ist der erste Bereich gegenüber dem zweiten Bereich größer. Dadurch erhöht sich der Komfort bei einer Anbringung bzw. Befestigung der Fußmatte für den Benutzer, da dieser z.B. bei einem Einlegen des ersten Bereichs der Fußmatte in z.B. ein Halterungselement, einen größeren Bereich zum "Anvisieren" zur Verfügung hat.

In einer weiteren Ausgestaltung der erfindungsgemäßen Aufnahme oder Halterung verjüngt sich der erste Bereich hin zu dem zweiten Bereich. Durch die Verjüngung zwischen dem ersten und dem zweiten Bereich entsteht eine Führung, die besonders bei einem Befestigungsvorgang der Fußmatte vorteilhaft ist, da der Anwender (bspw. anders als bei einem Druckknopfprinzip) nicht genötigt ist, zur Befestigung der Fußmatte einen exakten Befestigungspunkt anzuvisieren. Stattdessen wird die Fußmatte durch die Verjüngung während des Befestigungsvorgangs ohne ein gezieltes Einlegen in ein Halterungselement geführt, durch welches sie nachfolgen reversible gehalten werden kann.

Gemäß einer erfindungsgemäßen Ausgestaltung ist der Übergang von dem ersten Bereich in den zweiten Bereich, durch zumindest einen Schnapphaken verengt. Die Schnapphaken sind hierbei vorzugsweise im gleichen Fertigungsschritt zusammen mit der gesamten Aufnahme bzw. Halterung gefertigt und sind aus demselben Material wie die Aufnahme bzw. die Halterung. D.h. mit anderen Worten, dass die Schnapphaken bspw. beim gemeinsamen Extrudieren einer Fußmatte mit Aufnahme vorzugsweise in der Negativform der Fußmatte vorgesehen sind und somit nicht in einem separaten Fertigungsschritt vorzusehen sind. Dies hat den Vorteil, dass bei einer Befestigung der Fußmatte z.B. durch eine parallel zu einer Befestigungsfläche verlaufende Zugbewegung ein Befestigungselement in den zweiten Bereich einrasten kann. Dieses Einrasten erfolgt dabei unter Kraftaufbringung bei der Zugbewegung durch den, durch den zumindest einen Schnapphaken, verengten Übergang. Nach dem Einrasten wirkt der zumindest einen Schnapphaken als Stoppelement gegen ein ungewolltes Ausrasten.

In einer weiteren Ausgestaltung ist die erfindungsgemäße Halterung durch einen separaten Herstellungsschritt in die Fußmatte integrierbar. Diese Ausgestaltung hat den Vorteil, dass grundsätzlich bereits bestehende Fußmatten oder Fußmatten aus anderen Materialien nachträglich um die erfindungsgemäße Aufnahme ergänzt werden können.

In einer weiteren Ausgestaltung ist die Halterung durch Verrasten oder Vernähen an einer Fußmatte aus einem verformbaren Textilmaterial, vorzugsweise Velours, befestigbar. Diese Ausgestaltung hat den Vorteil, dass die erfindungsgemäße Halterung an Fußmatten befestigbar ist, die im eigentlichen Sinne nicht für ein Befestigen an einem Fahrzeugboden vorgesehen sind. Somit kann das Anwendungsspektrum der erfindungsgemäßen Befestigung durch die Halterung in Verbindung mit dem erfindungsgemäßen Halterungselement erweitert werden. Unter der Formulierung "verformbar" wird im hier vorliegenden Sinne ein weiches Textilmaterial verstanden, dass beispielsweise aufrollbar sein kann. Ein Verrasten zwischen der Halterung und einer Fußmatte aus Textilmaterial kann beispielsweise über eine klettverschlussartige Verbindung realisiert werden.

Gemäß einer weiteren vorteilhaften Ausgestaltung erfolgt ein Halten in der definierten Position durch Formschluss und/oder Kraftschluss. Durch eine Presspassung oder eine puzzleartige Ausgestaltung der Aufnahme könnte zudem durch eine entsprechende Negativform in der Fußmatte ein Integrieren unter Formschluss realisiert werden. Zudem könnte ein Integrieren unter Zuhilfenahme verschiedener Befestigungselemente erfolgen.

Es versteht sich, dass die vorstehende genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: ein Ausführungsbeispiel des erfindungsgemäßen Halterungssystems in einem in einem Kraftfahrzeug montierten Zustand;
- Fig. 2: ein Ausführungsbeispiel der erfindungsgemäßen Fußmatte mit integrierter Aufnahme in perspektivischer Ansicht;
- Fig. 3: das Ausführungsbeispiel der erfindungsgemäßen Fußmatte mit integrierter Aufnahme in Draufsicht;
- Fig. 4: ein Ausführungsbeispiel der erfindungsgemäßen Halterung für eine Fußmatte, welche keine integrierte Aufnahme aufweist, in perspektivischer Ansicht;
- Fig. 5: das Ausführungsbeispiel der erfindungsgemäßen Halterung in Draufsicht;
- Fig. 6: ein Ausführungsbeispiel des erfindungsgemäßen Halterungselement in perspektivischer Ansicht;
- Fig. 7: das Ausführungsbeispiel des erfindungsgemäßen Halterungselement in Seitenansicht; und
- Fig. 8: ein Ausführungsbeispiel eines erfindungsgemäßen Halterungssystems als Schnittansicht.

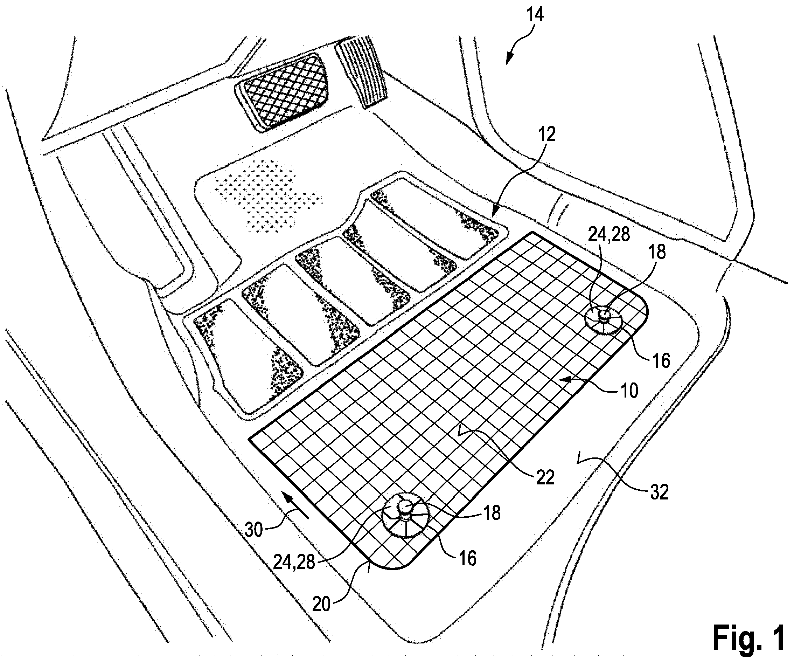

Fig. 1 zeigt ein Ausführungsbeispiel des erfindungsgemäßen Halterungssystems 100 in einem in einem Kraftfahrzeug montierten Zustand. Eine Fußmatte 10 ist in gezeigter Darstellung in einem Fußraum 12 eines Kraftfahrzeugs 14 angeordnet und weist eine integrierte Aufnahme 16 zur Befestigung der Fußmatte 10 an einem Halterungselement 18 auf. Das Halterungselement 18 ragt aus dem Fußraum 12 des Kraftfahrzeugs 4 hervor. In der gezeigten Darstellung weist die Fußmatte 10 zwei Aufnahme 16 auf, für die in dem Fußraum 12 zwei Halterungselemente 18 vorgesehen sind. Die Fußmatte 10 mit der Aufnahme 16 (bzw. im gezeigten Fall den Aufnahmen 16) bilden in befestigtem Zustand der Fußmatte 10 zusammen mit dem Halterungselement 18 ein Halterungssystem 100.

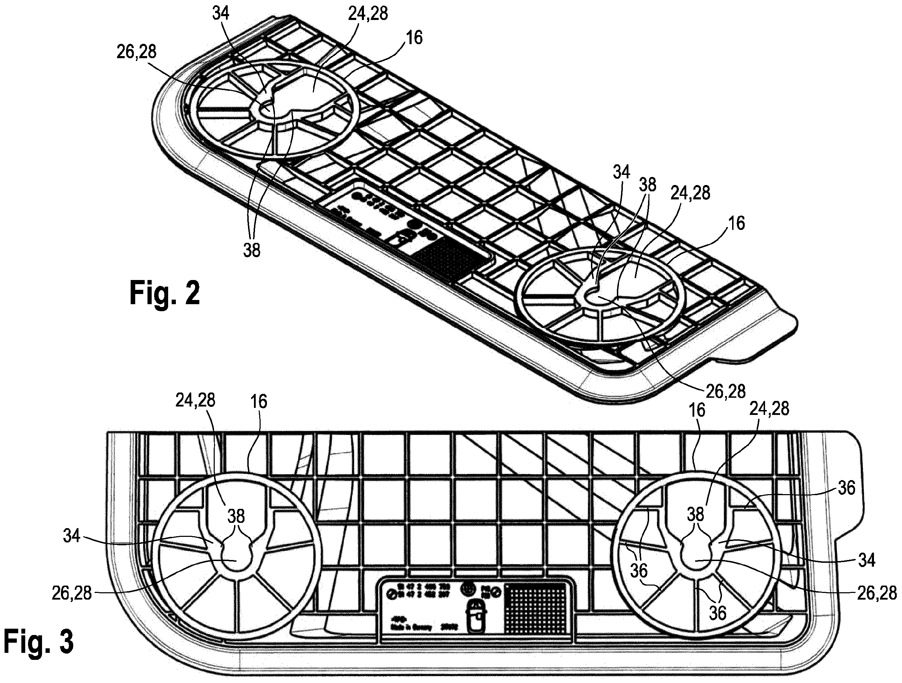

Die Fußmatte weist eine Unterseite 20 sowie eine Oberseite 22 auf, wobei die Aufnahme 16 gemäß einem Aspekt der Erfindung in der Unterseite 20 der Fußmatte 10 integriert ist und vorzugweise nicht durch die Oberseite 22 ragt. Zur Verdeutlichung ist die Oberseite 22 im karierten Bereich durchsichtig dargestellt, um die integrierte Aufnahme auf der Unterseite 20 sichtbar zu machen. Die Aufnahme 16 der Fußmatte 10 weist einen ersten Bereich 24 sowie einen zweiten Bereich 26 auf, die auf der Unterseite 20 der Fußmatte 10 nebeneinanderliegen und ineinander übergehen. Der erste Bereich 24 bildet zusammen mit dem zweiten Bereich 26 einen Materialausschnitt 28 (siehe Fig. 2 und 3). In der gezeigten Darstellung weist der zweite Bereich 26 einen kreissegmentartigen Querschnitt auf, welcher lediglich in der Unterseite 20 der Fußmatte 10 eingebracht ist und somit nicht bis zu der Oberseite 22 der Fußmatte hindurchragt. Dies hat im Wesentlichen den Vorteil, dass die Oberseite 22 der Fußmatte 10 intakt bleibt, was insbesondere aus ästhetischer Sicht bevorzugt ist, da keine Öffnung an der Oberseite 22 der Fußmatte 10 erkennbar ist.

Der erste Bereich 24 der Aufnahme 16 der Fußmatte 10 kann in das Halterungselement 18, das aus dem Fußraum 12 des Kraftfahrzeugs 14 hervorragt, eingelegt werden und über eine parallel zu dem Fußraum 12 verlaufende Zugbewegung entlang einer Vorzugsrichtung 30 durch Einrasten des Halterungselements 18 in dem zweiten Bereich 26 des Materialausschnitts 28 der Aufnahme 16 reversibel lösbar an dem Halterungselement 18 bzw. in dem Fußraum 12 des Kraftfahrzeugs 14 befestigt werden. Der Fußraum 12 des Kraftfahrzeugs 14 bildet dabei eine Montagefläche 32, mit der das Halterungselement 18 fest verbunden werden kann.

Der erste Bereich 24 des Materialausschnitts 28 weist einen im Wesentlichen rechteckigen Querschnitt auf, der in Richtung des zweiten Bereichs 26 konisch zuläuft bzw. sich zu dem zweiten Bereich 26 hin verjüngt und in den kreissegmentartigen Querschnitt des zweiten Bereichs 26 übergeht. Der zweite Bereich 26 weist eine teilweise umschließende Überlappung 34 auf, die einen materialverstärkten Hinterschnitt für den zweiten Bereich 26 bildet. Die eine teilweise umschließende Überlappung 34 steht zumindest teilweise über den Querschnitt des zweiten Bereichs 26 hervor und bildet somit einem Formschluss nach oben, durch welchen ein Abheben der Fußmatte 10 von dem Fußraum 12 des Kraftfahrzeugs 14 verhindert wird. Die Überlappung 34 stellt also eine Art Tasche oder Einwölbung dar.

Durch die bevorzugte Form kann die Fußmatte 10 gemeinsam mit der Aufnahme 16 extrudiert oder spritzgegossen werden. Vorzugsweise sind die Fußmatte 10 und die Aufnahme 16 somit einstückig aus einem Gummi oder einem Elastomer hergestellt. Einstückig bedeutet, dass die Fußmatte 10 samt Aufnahme 16 ein untrennbares Werkstück bilden. Bei einem im Spritzgussverfahren hergestellten Werkstück heißt dies insbesondere, dass alle Komponenten des Werkstück aus demselben, homogenverteilten Material sind und nur ein einziges Spritzgusswerkzeug für die Fertigung benötigt wird. In der in Fig. 2 und 3 gezeigten Ausführungsform der Fußmatte 10 umschließt die Überlappung 34 zusätzlich zu dem zweiten Bereich 26 ebenfalls teilweise den ersten Bereich 24 und weist zudem eine Vielzahl von Verstärkungsstreben 36 auf, die ausgehend von der Überlappung 34 vorzugsweise sternförmig abragen und somit dazu eingerichtet sind, den Materialausschnitt 28 bzw. die Aufnahme 16 zusätzlich zu dem Hinterschnitt zu versteifen. Auch die Verstärkungsstreben 36 sind so ausgestaltet, dass sie sich einfach in einem Spritzgussverfahren aus demselben Material wie die Fußmatte selbst herstellen lassen.

In den Fig. 2 und 3 weist die Aufnahme 16 in dem Übergangsbereich zwischen dem ersten Bereich 24 und dem zweiten Bereich 26 Schnapphaken 38 auf, die dazu dienen, die Fußmatte 10 auch dann in einem in das Halterungselement 18 eingerasteten Zustand zu halten, wenn beispielsweise eine Krafteinwirkung durch eine Fußbewegung eines Fahrers des Kraftfahrzeugs 14 entgegen der Vorzugsrichtung 30 erfolgt. In der gezeigten Ausführungsform weist die Aufnahme 16 zwei Schnapphaken 38 auf, die vorzugsweise aus dem gleichen Material wie die Aufnahme 16 sind und im gleichen Arbeitsschritt hergestellt werden. Die Schnapphaken 38 sind hierbei vorzugsweise derart ausgestaltet, dass ein sicheres Halten in der Einrastposition der Fußmatte bis zu einer Einwirkung einer vorbestimmten Grenzkraft, die entgegen der Vorzugsrichtung 30 wirkt und beispielsweise durch eine Rutschbewegung eines Fahrerfußes erfolgt, gewährleistet ist. Die Schnapphaken 38 habe gegenüber anderen Fixierungen den Vorteil, dass auch diese beim Spritzgießen der Fußmatte unmittelbar integrierbar sind.

Es sei erwähnt, dass die geometrische Ausgestaltung des ersten Bereichs 24 sowie des zweiten Bereichs 26 und die Anordnung der Schnapphaken 38 in einem Übergangsbereich zwischen dem ersten Bereich 24 und dem zweiten Bereich 26 grundsätzlich einer Vielzahl von geometrischen Formen entsprechen kann und nicht auf die hier dargestellten geometrischen Formen beschränkt ist. Die dargestellte Form ist jedoch besonders gut geeignet, die Aufnahme zusammen mit der gesamten Fußmatte in einem Arbeitsschritt und mit einem einzigen Spritzgusswerkzeug zu fertigen.

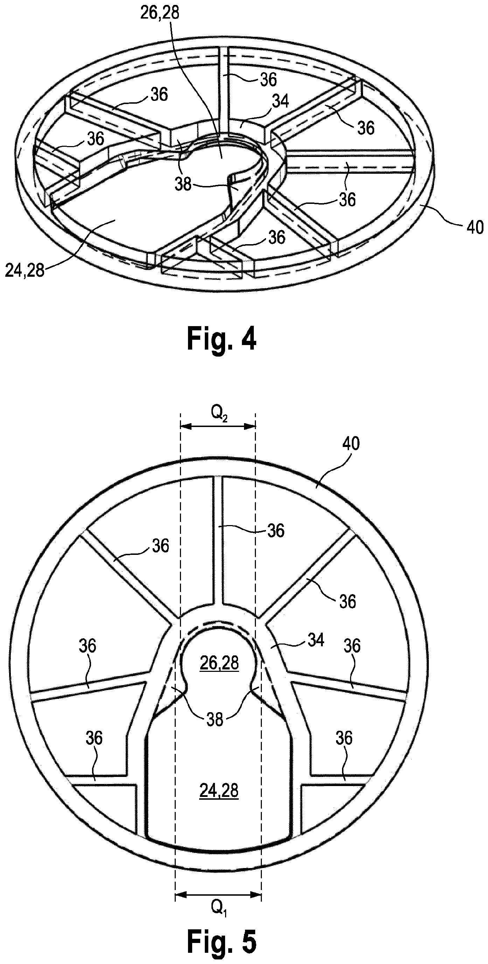

In Fig. 4 und 5 ist ein Ausführungsbeispiel einer erfindungsgemäßen Halterung 40 dargestellt, die mit einer Fußmatte 10, welche keine integrierte Aufnahme 16 aufweist, insbesondere mit der Unterseite 20 der Fußmatte 10 verbindbar ist. Es sei erwähnt, dass die Fußmatte 10 beispielsweise eine gebrauchte Fußmatte eines Kraftfahrzeugs 14 sein kann, in die eine solche erfindungsgemäße Halterung 40 in einem nachträglichen Herstellungsschritt integriert werden kann. Beispielsweise ist es vorstellbar, dass für ein solches nachträgliches Integrieren der Halterung 40 in eine Fußmatte aus einem anderen Material bspw. Adhäsion, Kohäsion, Formschluss und/oder Kraftschluss als Befestigungsmethode Verwendung findet. Hierbei wird unter Adhäsion das Aneinanderhaften / Kleben von Fußmatte und Aufnahme durch eine Grenzschicht betrachtet. Ein Integrieren durch Kohäsion könnte z.B. durch Schweißen, d.h. eine punktuelle thermische Erwärmung am Grenzübergang zwischen Aufnahme und Fußmatte und ein darauf folgendes Verbinden realisiert werden. Zudem ist es möglich, die Halterung 40 durch Verrasten oder Vernähen an einer Fußmatte aus einem verformbaren Textilmaterial zu befestigen. Das verformbare Textilmaterial kann vorzugsweise Velours oder ein Gewebe oder ein Gewirke sein, dessen Oberfläche durch Aufrauhung eine samtähnliche Qualität annehmen kann.

Die Halterung 40 weist in der hier gezeigten Darstellung (Fig. 4 und Fig. 5) die erfindungsgemäßen sowie vorteilhaften Merkmale der Aufnahme 16 auf. D.h., dass die Halterung 40 den Materialausschnitt 28 aufweist, der sich in den ersten und den zweiten Bereich 24, 26 unterteilt, wobei der erste Bereich 24 und der zweite Bereich 26 des Materialausschnitts 28 nebeneinander liegen und ineinander übergehen. Der zweite Bereich 26 weist die teilweise umschließende Überlappung 34 auf, die einen materialverstärkten Hinterschnitt für den zweiten Bereich 26 bildet. Die Halterung 40 weist ebenfalls die vorteilhaften Verstärkungsstreben 36 auf, die sternförmig von der teilweise den ersten sowie den zweiten Bereich 24, 26 umlaufenden Überlappung 34 in Richtung einer kreisförmigen Überlappung 34 der Halterung 40 abragen und den Materialausschnitt 28 zusätzlich versteifen. Ebenfalls weist die Halterung 40 in dem Übergangsbereich zwischen dem ersten und dem zweiten Bereich 24, 26 Schnapphaken 38 auf. In der gezeigten Darstellung weist die Halterung 40 zwei Schnapphaken auf.

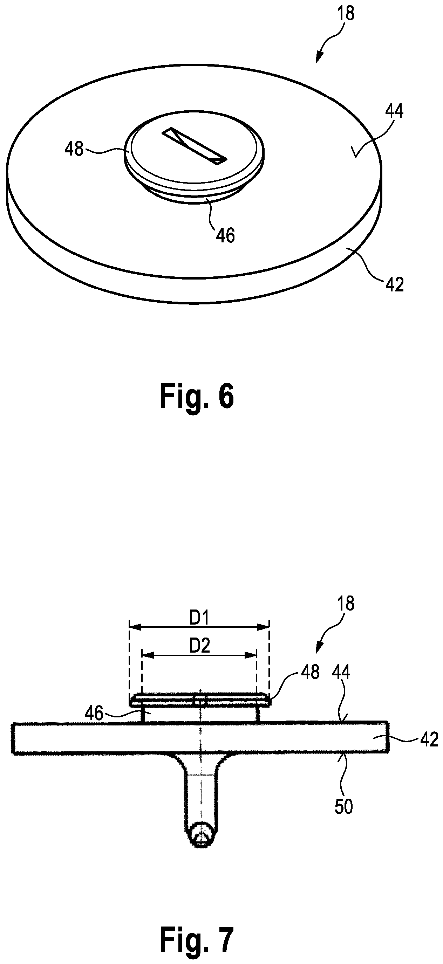

Fig. 6 und Fig. 7 zeigen eine perspektivische und seitliche Ansicht eines Ausführungsbeispiels des erfindungsgemäßen Halterungselements 18, welches als Befestigungsmittel / Gegenstück zu der in den Fig. 2 und 3 gezeigten erfindungsgemäßen Aufnahme 16 bzw. der in den Fig. 4 und 5 gezeigten Halterung 40 zur reversiblen Befestigung der Fußmatte 10 in dem Fußraum 12 dient. Das Halterungselement 18 bildet zusammen mit der Aufnahme 16 bzw. der Halterung 40 eine Schnappverbindung.

Das Halterungselement 18 weist einen Montagesockel 42 auf, der in der hier gezeigten Darstellung tellerartig und kreisrund ausgestaltet ist. Von einer Sockeloberseite 44 des Montagesockels 42 ragt ein Zapfen 46 des Halterungselements 18 aus einem Zentrum des tellerartigen Montagesockels 42 hervor. Der Zapfen 46 weist an einem oberen Ende einen umlaufenden Wulst 48 auf, durch den ein Abheben der Fußmatte 10 von dem Fußraum 12 verhindert wird. Der Zapfen 46 kann in montiertem Zustand der Fußmatte 10 in somit nicht aus der Aufnahme 16 bzw. der Halterung 40 herausgleiten. Der umlaufende Wulst 48 verhindert durch seinen im Vergleich zu dem Zapfen 46 vergrößerten Querschnitt somit bspw. ein unbeabsichtigtes Abheben der Fußmatte 10 von der Montagefläche 32.

Der umlaufende Wulst 48 hat dabei vorzugsweise einen Durchmesser D1, der vorzugsweise dem Querschnitt Q1 des zweiten Bereichs 26 der Halterung 40 bzw. der Aufnahme 16 entspricht. Der umlaufende Wulst 48 liegt in montiertem Zustand vorzugsweise passgenau in der durch den Hinterschnitt gebildeten Taschen ein, wodurch ein Herausgleiten entlang der Richtung des Normalenvektors der Montagefläche verhindert wird. Die Tasche ist zwischen der Unterseite 20 und der Überlappung 34 ausgebildet und dient vorzugsweise zur Aufnahme der umlaufende Wulst 48 des Halterungselements 18. Der Durchmesser D1 des Zapfens 46 entspricht vorzugsweise einem im Vergleich zu einem Querschnitt Q1 des zweiten Bereichs 26 verminderten Querschnitt Q2, der durch die zumindest teilweise den zweiten Bereich 26 umlaufende Überlappung 34, die den Hinterschnitt bildet, sowie die Schnapphaken 38 zumindest teilweise eingefasst ist.

Das Einrasten der Halterung 40 bzw. der Aufnahme 16 in das Halterungselement 18 erfolgt mittels der Schnapphaken 38, die in eingeschnapptem Zustand den Zapfen 46 des Halterungselements 18 zumindest teilweise umgreifen bzw. umschließen. Somit wird vorzugsweise zumindest bis zu einer vordefinierten Grenzzugbelastung ein Herausgleiten / Ausschnappen der Aufnahme 16 bzw. der Halterung 40 aus dem Halterungselement 18 entgegen der Vorzugsrichtung 30 verhindert. Hierbei können die Durchmesser D1, D2 vorzugsweise im Vergleich zu den Querschnitten Q1, Q2 minimale kleiner ausgestaltet sein, um Spalt- bzw. Pass-Maße einzuhalten, die für eine einfache und sichere Befestigung der Fußmatte 10 bevorzugt eingehalten sind.

Auf der gegenüberliegenden Seite des Montagesockels 42, d.h. auf einer Sockelunterseite 50 des Montagesockels 42 ragt optional ein stiftartiges Element 52 aus dem Zentrum des Montagesockels 42 ab und dient vorzugsweise der Befestigung des Montagesockels 42 bzw. des Halterungselements 18 auf der Montagefläche 32 des Fußraums 12. Hierbei ist es beispielsweise möglich, dass in dem Fußraum 12 eine Bohrung 54 mit einem Durchmesser, der im Wesentlichen gleichgroß wie der des Elements 52 ist, vorgesehen ist. In die Bohrung 54 kann das Element 52 beispielsweise, eingesteckt, eingepasst oder verschraubt werden. In anderen Ausführungsbeispielen kann das Zapfenelement 52 beispielsweise als Schraube oder auch als sonstiges Befestigungselement ausgestaltet sein und dient der festen Verbindung des Halterungselements 18 auf der Montagefläche 42 des Fußraums 12. Ebenfalls kann das Halterungselement 18 auch auf eine andere Art, bspw. vollständig in die Montagefläche 32 integriert, oder auf dieser durch Aufkleben, Aufnieten oder Aufschweißen reversible oder irreversible befestigt sein.

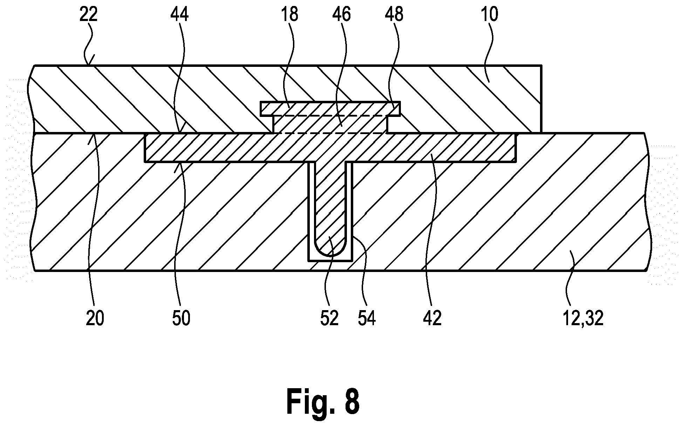

In Fig. 8 ist ein Ausführungsbeispiel eines erfindungsgemäßen Halterungssystems als Schnittansicht gezeigt, bei welchem das Halterungselement 18 in der Bohrung 54, die ein Innengewinde aufweist, das zu einem vorzugsweise vorhandenen Außengewinde des Elements 52 passt, eingeschraubt ist.

## Patentansprüche

1. Fußmatte (10), die aufweist:
- eine Ober- und eine Unterseite (20,22) sowie
- eine in der Unterseite (20) integrierte Aufnahme (16) zur Befestigung der Fußmatte (10) an einem Halterungselement (18),
wobei die Aufnahme (16) einen Materialausschnitt (28) aufweist, der sich in einen ersten und einen zweiten Bereich (24, 26) unterteilt,
wobei der erste Bereich (24) und der zweite Bereich (26) des Materialausschnitts (28) auf der Unterseite (20) nebeneinanderliegen und ineinander übergehen, und
wobei der zweite Bereich (26) eine den zweiten Bereich (26) teilweise umschließende Überlappung (34) aufweist, die einen materialverstärkten Hinterschnitt für den zweiten Bereich (26) bildet.

2. Fußmatte gemäß Anspruch 1, wobei der zweite Bereich (26) einen kreissegmentartigen Querschnitt aufweist.

3. Fußmatte gemäß Anspruch 1 oder 2, wobei die Fußmatte (10) und die Aufnahme (16) einstückig aus demselben Material gefertigt sind, insbesondere in einem extrudierenden oder spritzgießenden Prozessschritt gefertigt sind.

4. Fußmatte gemäß einem der voranstehenden Ansprüche, wobei die Fußmatte (10) aus Gummi oder einem Elastomer hergestellt ist.

5. Fußmatte gemäß einem der voranstehenden Ansprüche, wobei der materialverstärkte Hinterschnitt (34) zusätzlich zu der teilweise umschließenden Überlappung (34) des zweiten Bereichs (26), eine teilweise umschließende Überlappung (34) des ersten Bereichs (24) umfasst.

6. Fußmatte gemäß einem der voranstehenden Ansprüche, wobei die Aufnahme (16) zusätzlich zu dem materialverstärkten Hinterschnitt (34) Verstärkungsstreben (36) aufweist, die dazu eingerichtet sind, den Materialausschnitt (28) zu versteifen.

7. Fußmatte gemäß einem der voranstehenden Ansprüche, wobei der erste Bereich (24) gegenüber dem zweiten Bereich (26) größer ist, und/oder wobei sich der erste Bereich (24) zu dem zweiten Bereich (26) hin verjüngt.

8. Fußmatte gemäß einem der voranstehenden Ansprüche, wobei der Übergang von dem ersten Bereich (24) in den zweiten Bereich (26), durch zumindest einen Schnapphaken (38) verengt ist.

9. Halterung (40), die mit einer Fußmatte, insbesondere mit einer Unterseite (20) einer Fußmatte verbindbar ist, wobei die Halterung (40) einen Materialausschnitt (28) aufweist, der sich in einen ersten und einen zweiten Bereich (24, 26) unterteilt, wobei der erste Bereich (24) und der zweite Bereich (26) des Materialausschnitts (28) nebeneinanderliegen und ineinander übergehen, und wobei der zweite Bereich (26) eine den zweiten Bereich (26) teilweise umschließende Überlappung (34) aufweist, die einen materialverstärkten Hinterschnitt für den zweiten Bereich (26) bildet.

10. Halterung gemäß Anspruch 9, wobei die Halterung (40) durch einen separaten Herstellungsschritt in eine Fußmatte integrierbar ist.

11. Halterung gemäß einem der Ansprüche 9 oder 10, wobei die Halterung (40) durch Verrasten oder Vernähen an einer Fußmatte aus einem verformbaren Textilmaterial, vorzugsweise Velours, befestigbar ist.

12. Halterung gemäß einem der Ansprüche 9 bis 11, wobei der materialverstärkte Hinterschnitt zusätzlich zu der teilweise umschließenden Überlappung (34) des zweiten Bereichs (26), eine teilweise umschließende Überlappung (34) des ersten Bereichs (24) umfasst.

13. Halterung gemäß einem der Ansprüche 9 bis 12, die zusätzlich zu dem materialverstärkten Hinterschnitt Verstärkungsstreben (36) aufweist, die dazu eingerichtet sind, den Materialausschnitt (28) zu versteifen, und/oder wobei der erste Bereich (24) gegenüber dem zweiten Bereich (26) größer ist, wobei insbesondere sich der erste Bereich (24) zu dem zweiten Bereich (26) hin verjüngt.

14. Halterungssystem (100), das aufweist:
- ein Halterungselement (18), das fest mit einer Montagefläche (32) verbindbar ist und in einem verbundenen Zustand zapfenartig aus der Montagefläche (32) hervorragt; und
- eine Fußmatte (10) mit einer integrierten Aufnahme (16) gemäß Anspruch 1, oder eine Fußmatte mit einer Halterung (40) gemäß Anspruch 10;
wobei die Aufnahme (16) der Fußmatte (10) oder die Halterung (40) einer Fußmatte in das Halterungselement (18) einlegbar und über eine parallel zu der Montagefläche (32) verlaufende Zugbewegung entlang einer Vorzugsrichtung (30) mit diesem reversibel lösbar in einer definierten Position verbindbar ist.

15. Halterungsystem gemäß Anspruch 14, wobei ein Halten in der definierten Position durch Formschluss und/oder Kraftschluss erfolgt.
